# EUROPEAN PATENT SPECIFICATION

(11) **EP 2 744 056 B1**
(45) Date of publication and mention of the grant of the patent: **12.08.2015**
(21) Application number: 12840898.6
(22) Date of filing: 23.02.2012
(51) Int. Cl.: H02G 3/04, F16L 11/11, F16L 9/12

(54) **CORRUGATED TUBE, INTERMEDIATE PRODUCT FOR CORRUGATED TUBE, AND WIRE-HARNESS WITH CORRUGATED TUBE ATTACHED**
WELLROHR, ZWISCHENPRODUKT FÜR EIN WELLROHR UND KABELBAUM MIT DEM DARAN BEFESTIGTEN WELLROHR
TUYAU ANNELÉ, PRODUIT INTERMÉDIAIRE POUR TUYAU ANNELÉ ET FAISCEAU DE CONDUCTEURS AUQUEL EST FIXÉ UN TUYAU ANNELÉ

(30) Priority: 20.10.2011 JP 2011230950
(43) Date of publication of application: 18.06.2014
(73) Proprietor: Sumitomo Wiring Systems, Ltd., Yokkaichi-shi, Mie 510-0058 (JP)
(72) Inventor: SHIMIZU Masataka, Yokkaichi-shi Mie 510-0058 (JP)
(74) Representative: Takeuchi, Maya
(86) International application number: PCT/JP2012/054369
(87) International publication number: WO 2013/057966

(56) References cited:
- JP-A- 2002 369 332
- JP-A- 2009 038 964
- JP-A- 2009 142 100
- JP-A- 2009 142 100
- JP-A- 2009 213 226
- US-A1- 2002 185 190

## Description

### Field of the Invention

The present invention relates to a corrugated tube for protecting an electric wire.

### Background Art

Conventionally, a corrugated tube in which a locking structure is formed as in Patent Document 1, Patent Document 2 and Patent Document 3 has been proposed.

In the corrugated tube disclosed in Patent Document 1, locking projections are formed on one side of both end portions flanking a slit. When the slit is closed, the locking projections engage closing walls on the other side of both the end portions and the slit is locked in a closed state.

In the corrugated tube disclosed in Patent Document 2, closing walls and locking portions to be engaged with the closing walls are alternately arranged in an axial direction with respect to both end portions flanking a slit.

In the corrugated tube disclosed in Patent Document 3, a slit is covered by a flat extension.

### Citation List

### Patent Documents

Patent Document 1: JP 2009-38964A
Patent Document 2: JP 2009-142100A
Patent Documet 3: US 2002/185190 A

### Summary of the Invention

### Technical Problem

However, in the technique disclosed in Patent Document 1, the locking projections engage the closing walls from the inner circumferential side of the closing wall. Therefore, positional displacement in a radial direction of the corrugated tube of both the end portions flanking the slit may occur. Thereby, for example, one end portion flanking the slit may be inserted into the inner circumferential side of the other end portion.

Moreover, in the technique disclosed in Patent Document 2, the locking portions need to be locked to the closing walls in many positions in order to close the slit, so that a large power is required for closing the slit and there is difficulty in operability.

Therefore, it is an object of the present invention to close the slit as easily as possible while suppressing positional displacement of both end edge portions flanking the slit.

### Solution to Problem

To solve the foregoing problems, the first aspect includes a corrugated tube body portion formed in a tubular shape in which annular projecting portions and annular recessed portions are alternately formed in a longitudinal direction and a slit is formed in a longitudinal direction; a plurality of first extended pieces provided on one side of two side edge portions of the corrugated tube body portion, the side edge portions flanking the slit; and a plurality of second extended pieces provided on the other side of the two side edge portions, wherein the slit is closed in a state where the plurality of the first extended pieces and the plurality of the second extended pieces are disposed on an inner circumferential side of the corrugated tube body portion at respectively different positions in a longitudinal direction of the corrugated tube body portion, and at least one of the plurality of the first extended pieces and the plurality of the second extended pieces is formed into a flat piece having a flat shape.

The second aspect is the corrugated tube according to the first aspect, wherein the slit is closed in a state where the plurality of the first extended pieces and the plurality of the second extended pieces are meshed so as to abut against each other in a longitudinal direction of the corrugated tube body portion.

The third aspect is the corrugated tube according to the first aspect or the second aspect, wherein at least one of the plurality of the first extended pieces and the plurality of the second extended pieces that are not formed into the flat pieces, is formed into a locking piece having a locking projection, and a portion of the two side edge portions that faces the locking piece is formed into a locked portion that can lock the locking piece.

The fourth aspect is the corrugated tube according to the third aspect, wherein the locking projection is formed at a position corresponding to the annular projecting portion of the corrugated tube body portion and is locked to the locked portion from an inner circumferential side of the corrugated tube body portion.

The fifth aspect is the corrugated tube according to the third aspect or the fourth aspect, wherein the locking piece is formed only on one side of the two side edge portions.

The sixth aspect is the corrugated tube according to any one of the first to fifth aspects, wherein a relief recessed portion is formed on an inner circumferential side portion of the two side edge portions in the corrugated tube body portion, where the plurality of the first extended pieces and the plurality of the second extended pieces are disposed.

An intermediate corrugated tube product according to the seventh aspect includes a corrugated tube body portion formed in a tubular shape with a C-shaped cross section in which annular projecting portions and annular recessed portions are alternately formed in a longitudinal direction; a plurality of locking piece forming portions that have a locking projection and are provided spaced apart from each other in a longitudinal direction of the corrugated tube body portion between the two side edge portions of the corrugated tube body portion; and a plurality of flat piece forming portions that are formed in a flat shape and are provided between the plurality of the locking piece forming portions provided between the two side edge portions of the corrugated tube body portion in a state of being integrated with the plurality of the locking piece forming portions.

A wire harness with a corrugated tube according to the eighth aspect includes a wire harness including at least one electric wire; and the corrugated tube according to any one of claims 1 to 6, covering the wire harness in a state where the plurality of the first extended pieces and the plurality of the second extended pieces are inserted into the corrugated tube body.

### Advantageous Effects of the Invention

With a corrugated tube according to the first aspect, the slit is closed in a state where the plurality of the first extended pieces and the plurality of the second extended pieces are disposed on an inner circumferential side of the corrugated tube body portion at different positions from each other in a longitudinal direction of the corrugated tube body portion, and therefore, positional displacement of both the side edge portions in a radial direction of the corrugated tube body portion is suppressed. Moreover, at least one of the plurality of the first extended pieces and the plurality of the second extended pieces is formed into a flat piece having a flat shape, and therefore, the slit can be closed as easily as possible.

With the second aspect, the slit is closed in a state where the plurality of the first extended pieces and the plurality of the second extended pieces are meshed so as to abut against each other in a longitudinal direction of the corrugated tube body portion, and therefore, positional displacement of both the side edge portions in a longitudinal direction of the corrugated tube body portion tends not to occur.

With the third aspect, an opening of the slit is suppressed by locking the locking piece to the locked portion. At this time, since positional displacement of both the side edge portions is suppressed by the first extended pieces and the second extended pieces, unlocking of the locking pieces and the locked portions is suppressed and the opening of the slit is suppressed securely.

With the fourth aspect, the locking projection is formed at the position corresponding to the annular projecting portion of the corrugated tube body portion and is locked from the inner circumferential side of the corrugated tube body portion to the locked portion, and therefore, the locking projection can be locked to the locked portion at the portion where the annular projecting portion is formed while not affecting the inner diameter of the corrugated tube body portion as much as possible.

With the fifth aspect, the locking piece is formed only on one side of both the side edge portions, and therefore, the slit can be closed easily while locking the locking piece to the locked portion.

With the sixth aspect, a relief recessed portion is formed on a portion that is an inner circumferential side portion of both the side edge portions in the corrugated tube body portion and where the plurality of the first extended pieces and the plurality of the second extended pieces are disposed, and therefore, projecting of the first extended pieces and the second extended pieces toward the inner circumferential side of the corrugated tube body portion is suppressed.

With the seventh aspect, a corrugated tube in which a slit has both side edge portions with a linear shape can be produced by being linearly separated between one side of a plurality of locking piece forming portions and a plurality of flat piece forming portions and the corrugated tube body portion. Moreover, a corrugated tube in which the locking pieces are provided on one side of both side edge portions flanking a slit in the corrugated tube body portion and the flat pieces are formed on the other side can be produced by being separated zigzag so as to separate a plurality of locking piece forming portions and a plurality of flat piece forming portions.

With a wire harness with a corrugated tube according to the eighth aspect, the slit is closed in a state where the plurality of the first extended pieces and the plurality of the second extended pieces are disposed on an inner circumferential side of the corrugated tube body portion at different positions from each other in a longitudinal direction of the corrugated tube body portion, and therefore, positional displacement of both the side edge portions in a radial direction of the corrugated tube body portion is suppressed. Moreover, at least one of the plurality of the first extended pieces and the plurality of the second extended pieces is formed into a flat piece having a flat shape, and therefore, the slit can be closed as easily as possible.

### Brief Description of Drawings

FIG. 1 is a partial perspective view of a corrugated tube according to an embodiment.
FIG. 2 is a partial front view of the same corrugated tube as in FIG. 1.
FIG. 3 is a partial plan view of the same corrugated tube as in FIG. 1.
FIG. 4 is a partial explanatory drawing of the same corrugated tube as in FIG. 1, viewed from its inner circumferential side.
FIG. 5 is a partial sectional view showing a state in which a locking piece is being locked to a locked portion.
FIG. 6 is a partial sectional view showing a state in which the locking piece is being locked to the locked portion.
FIG. 7 is a partial perspective view of a portion where the locking piece is locked to the locked portion.
FIG. 8 is a partial front view of the portion where the locking piece is locked to the locked portion.
FIG. 9 is a partial plan view of the portion where the locking piece is locked to the locked portion.
FIG. 10 is a partial explanatory drawing of the portion where the locking piece is locked to the locked portion viewed from the inner circumferential side of the corrugated tube.
FIG. 11 is a partial sectional view of the portion where the locking piece is locked to the locked portion.
FIG. 12 is a partial sectional view of the portion where the locking piece is locked to the locked portion.
FIG. 13 is a partial plan view of an intermediate corrugated tube product.
FIG. 14 is a partial plan view of a corrugated tube according to a modified example.
FIG. 15 is a partial plan view of a corrugated tube according to a modified example.
FIG. 16 is a partial plan view of a corrugated tube according to a modified example.
FIG. 17 is a partial plan view of a corrugated tube according to a modified example.
FIG. 18 is a partial plan view of a corrugated tube according to a modified example.
FIG. 19 is a partial plan view of a corrugated tube according to a modified example.

### Description of Embodiments

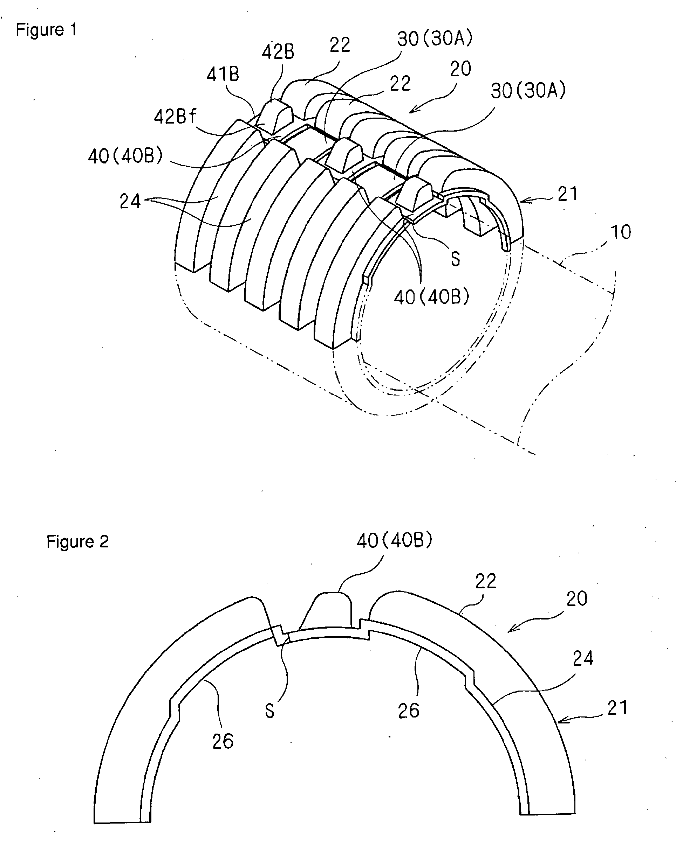

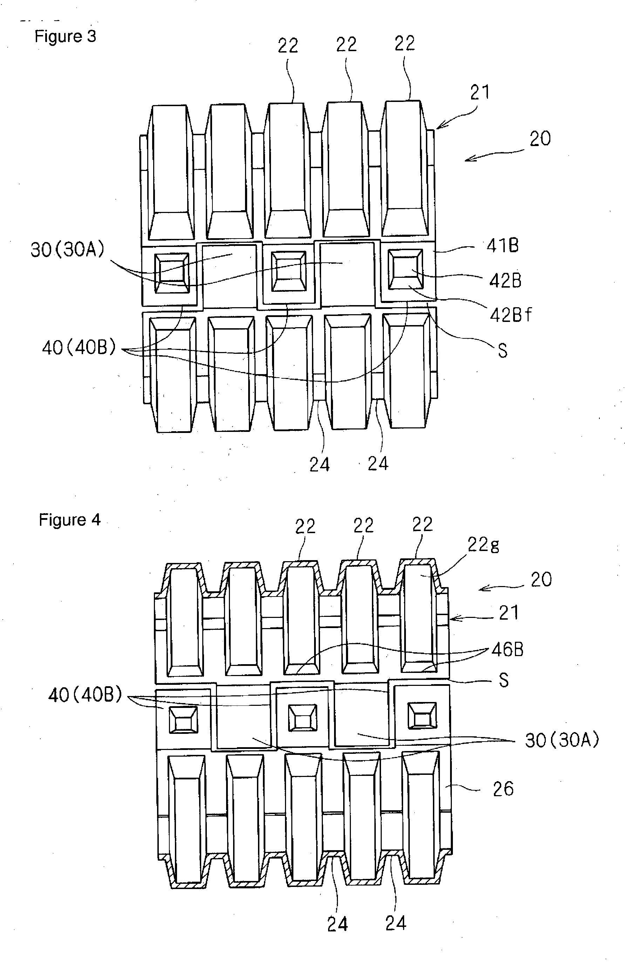

Hereinafter, a corrugated tube and a wire harness with a corrugated tube according to an embodiment will be described. FIG. 1 is a partial perspective view of a wire harness 10 to which a corrugated tube 20 according to the embodiment is attached, FIG. 2 is a partial front view of the same corrugated tube 20, FIG. 3 is a partial plan view of the corrugated tube 20, and FIG. 4 is a partial explanatory drawing of a slit portion of the corrugated tube 20 viewed from the inner circumferential side.

This corrugated tube 20 is a member for covering and protecting the wire harness 10 disposed in a vehicle or the like.

Here, the wire harness 10 has a structure in which a plurality of electric wires is bundled together. More specifically, the wire harness 10 has a structure in which a plurality of electric wires is bundled together while branching the wires depending on the wiring arrangement in a vehicle in which the wire harness 10 is disposed. The wire harness 10 does not necessarily have to be branched and may also include a single electric wire. It is also possible that other optical cables or the like are bundled together with the wire harness 10. It is sufficient if the corrugated tube 20 is attached at least to a part of the wire harness 10, that is, the corrugated tube 20 may be attached to a part of the wire harness 10 or substantially the entire wire harness 10.

This corrugated tube 20 includes a corrugated tube body portion 21, a plurality of first extended pieces 30 and a plurality of second extended pieces 40, and is formed in an overall tubular shape with a slit S. The corrugated tube 20 is formed, for example, by extruding melted resin in a tubular shape and pressing this resin against a predetermined mold by vacuum molding, blow molding, or the like. As a result, in the corrugated tube 20, the corrugated tube body portion 21 including annular projecting portions 22 and annular recessed portions 24 described below, the plurality of the first extended pieces 30, and the plurality of the second extended pieces 40 are formed so as to have the same thickness.

The corrugated tube body portion 21 is formed in a tubular shape and the slit S is formed in a longitudinal direction thereof. In other words, the corrugated tube body portion 21 is formed in a tubular shape with a C-shaped cross section. The corrugated tube body portion 21 has a structure in which the annular projecting portions 22 and the annular recessed portion 24 are formed alternately in a longitudinal direction thereof. The annular projecting portions 22 project toward a circumferential direction on the outer circumferential surface of the corrugated tube body portion 21. The annular recessed portions 24 are recessed in a circumferential direction on the outer circumferential surface of the corrugated tube body portion 21. The annular projecting portions 22 and the annular recessed portions 24 are provided with the same thickness.

Since this corrugated tube body portion 21 is easily deformed elastically at the steps portion between the annular projecting portions 22 and the annular recessed portions 24, the corrugated tube body portion 21 has the property of being overall easily bent and deformed. Moreover, the inner diameter of the above-described annular recessed portion 24 is designed to be larger (ordinarily just a little larger) than the outer diameter of the wire harness 10 to which the corrugated tube is attached.

The plurality of the first extended pieces 30 are formed, spaced apart from each other, on one side of both the side edge portions flanking the slit S in the corrugated tube body portion 21. The plurality of the second extended pieces 40 are formed, spaced apart from each other, on the other side of both the side edge portions.

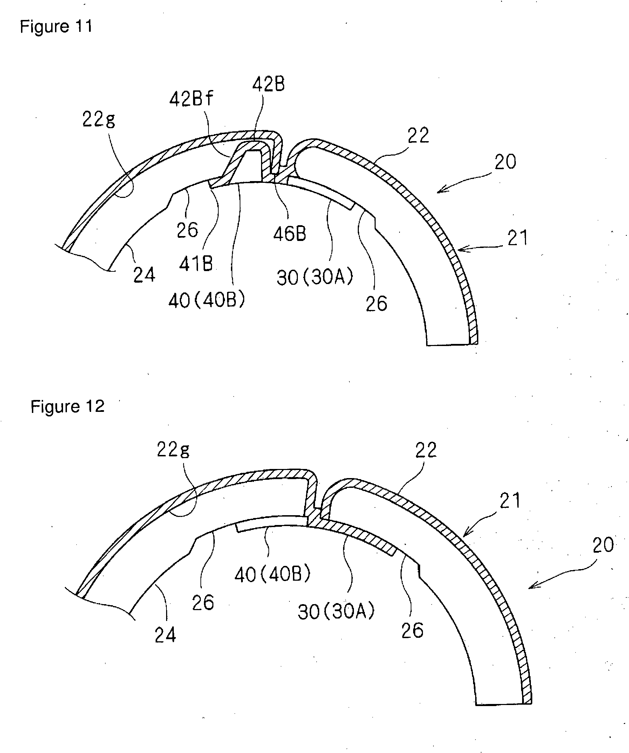

Moreover, the plurality of the first extended pieces 30 and the plurality of the second extended pieces 40 are formed at different positions from each other in a longitudinal direction of the corrugated tube body portion 21. As a result, the slit S is closed in a state where the plurality of the first extended pieces 30 and the plurality of the second extended pieces 40 are disposed on the inner circumferential side of the corrugated tube body portion 21 at different positions from each other in a longitudinal direction of the corrugated tube body portion 21 (see FIG. 11).

Here, the plurality of the first extended pieces 30 and the plurality of the second extended pieces 40 are formed so as to be alternately positioned in a longitudinal direction of the corrugated tube body portion 21. The first extended pieces 30 and the second extended pieces 40 are adjacent to each other via a cutting line that is a small space described below. The slit S is closed in a state where the plurality of the first extended pieces 30 and the plurality of the second extended pieces 40 are intermeshed so as to abut against each other in a longitudinal direction of the corrugated tube body portion 21.

In particular, in the present embodiment, the plurality of the first extended pieces 30 and the plurality of the second extended pieces 40 are formed at positions and with pitches that correspond to the plurality of annular projecting portions 22. In other words, first extended pieces 30 and second extended pieces 40 that are adjacent to each other are separated by a line along the central portion, with respect to a width direction, of the annular recessed portion 24. When the slit S is closed, the plurality of the first extended pieces 30 and the plurality of the second extended pieces 40 are disposed so as to be inserted into the inner circumferential sides of the corresponding annular projecting portions 22.

It should be noted that the cutting line separating adjacent first extended pieces 30 and the second extended pieces 40 may also be designed to be at other positions than the line along the central portion, with respect to a width direction, of the annular recessed portion 24. Moreover, it is also possible that a larger gap is provided between adjacent first extended pieces 30 and second extended pieces 40 and the first extended pieces 30 and the second extended pieces 40 need not abut against each other, that is, not mesh with each other, in a state where the slit S is closed.

Furthermore, at least one of the plurality of the first extended pieces 30 and the plurality of the second extended pieces 40 described above is formed into flat pieces 30A having a flat shape (in the present embodiment, the first extended piece 30 and the flat piece 30A refer to the same portion). In the present embodiment, all of the first extended pieces 30 that are formed on the one side of the side edge portions flanking the slit S are formed as flat pieces 30A. Here, "flat piece 30A having a flat shape" means that the flat piece 30A is formed so as to be so flat that it can be inserted underneath the side edge portion without being locked to the side edge portion flanking the slit S in the corrugated tube body portion 21. Therefore, the flat piece 30A may have a slightly uneven surface or a slightly curved shape. Also, here, the flat piece 30A is formed so as to have a flat square shape that is slightly curved along the inner circumferential shape of the annular recessed portion 24.

Moreover, at least one of the plurality of the first extended pieces 30 and the plurality of the second extended pieces 40 that are not formed into the above-described flat pieces 30A, that is, here, all of the second extended pieces 40 are formed into locking pieces 40B having a locking projection 42B (in the present embodiment, the second extended piece 40 and the locking pieces 40B refer to the same portion). Furthermore, the portion in both the side edge portions flanking the slit S that faces the above-described locking piece 40B is formed into a locked portion 46B that can lock the locking piece 40B.

More specifically, the locking piece 40B has a plate-shaped portion 41B and the locking projection 42B. The plate-shaped portion 41B is formed so as to have a flat square shape that is slightly curved along the inner circumferential shape of the annular recessed portion 24 in the same manner as the flat piece 30A described above, and can be inserted into the inner circumferential side of the side edge portion of the corrugated tube body portion 21. Here, the plate-shaped portion 41B has the same thickness, width, and length as the flat piece 30A, but these do not necessarily have to be the same. Moreover, the locking projection 42B projects at that position on the outer circumferential surface of the plate-shaped portion 41B that corresponds to the annular projecting portion 22 (here, at the central portion of the outer circumferential surface of the plate-shaped portion 41B). A surface 42Bf on the front end side of the plate-shaped portion 41B in the locking projection 42B is formed into a guide surface 42Bf that is inclined to the inner circumferential side toward the front end side of the plate-shaped portion 41B.

The height dimension of the locking projection 42B is set to be smaller than the depth dimension of an inner circumferential side recessed portion 22g that is formed on the inner circumferential side of the annular projecting portion 22, and the width dimension of the locking projection 42B is set to be smaller than the width dimension of this inner circumferential side recessed portion 22g.

Moreover, the above-described locked portion 46B is formed at the side edge portion flanking the slit S by a wall portion that blocks one end portion in a circumferential direction of the annular projecting portion 22 (see FIG. 12). When the locking piece 40B is inserted into the inner circumferential side of the annular projecting portion 22 at the side edge portion which the locking piece 40B faces via the slit S, the locking projection 42B fits within the inner circumferential side recessed portion 22g and locks the above-described locked portion 46B in a direction where the slit S is not opened so as to prevent pullout. As a result, the locking projection 42B is locked to the locked portion 46B from the inner circumferential side of the corrugated tube body portion 21.

It should be noted that various combinations are conceivable concerning which of the plurality of the first extended pieces 30 and the plurality of the second extended pieces 40 are formed into the flat pieces 30A and which into the locking pieces 40B. Various examples will be described in the section describing modified examples below.

Moreover, a relief recessed portion 26 is formed in an inner circumferential side portion of both side edge portions flanking the slit S in the corrugated tube body portion 21 described above, where the flat pieces 30A serving as the plurality of the first extended pieces 30 and the locking pieces 40B serving as the plurality of the second extended pieces 40 are disposed.

That is, a plurality of the flat pieces 30A are disposed on the inner circumferential side of the opposing side edge portion of the corrugated tube body portion 21, and therefore, if no measures are taken in particular, the plurality of the flat pieces 30A projects by an amount corresponding to their thickness from the inner circumferential portion of the corrugated tube body portion 21. Accordingly, recesses having a thickness and length corresponding to those of the flat piece 30A are formed on the inner circumferential portions of the side edge portions of the corrugated tube body portion 21 that face the plurality of the first extended pieces 30, and serve as the relief recessed portions 26.

In the same manner, a plurality of the locking pieces 40B are disposed on the inner circumferential side of the opposing side edge portion of the corrugated tube body portion 21, and therefore, if no measures are taken in particular, the plurality of the plate-shaped portions 41B of the locking pieces 40B projects by an amount corresponding to their thickness from the inner circumferential portion of the corrugated tube body portion 21. Accordingly, recesses having a thickness and length corresponding to those of the plate-shaped portion 41B are formed on the inner circumferential portions of the side edge portions of the corrugated tube body portion 21 that face the locking pieces 40B, and serve as the relief recessed portions 26.

The present embodiment results in the formation of the relief recessed portions 26 that are continuously recessed in a longitudinal direction of the corrugated tube body portion 21 on the inner circumferential portion of both the side edge portions flanking the slit S in the corrugated tube body portion 21 (that is, on the inner circumferential side of the annular recessed portions 24).

The operation of attaching the corrugated tube 20 constituted in this manner to the wire harness 10 will be described next.

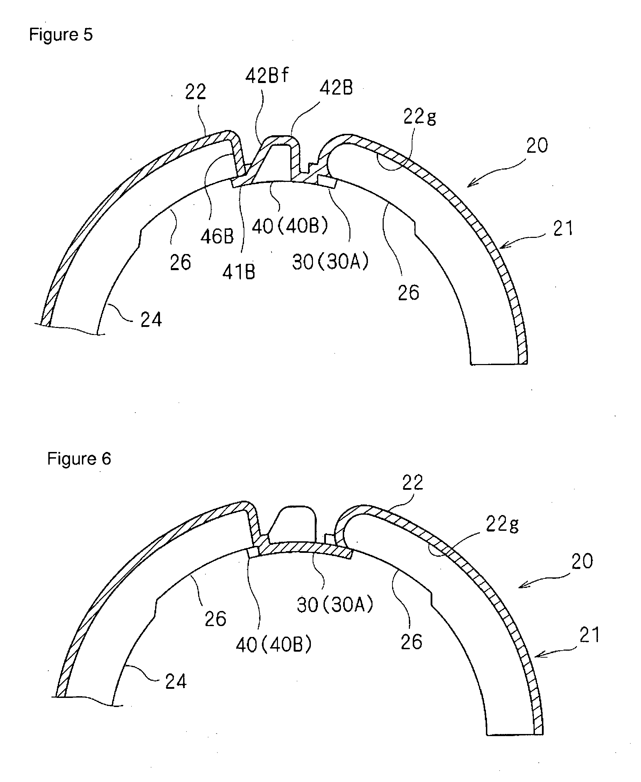

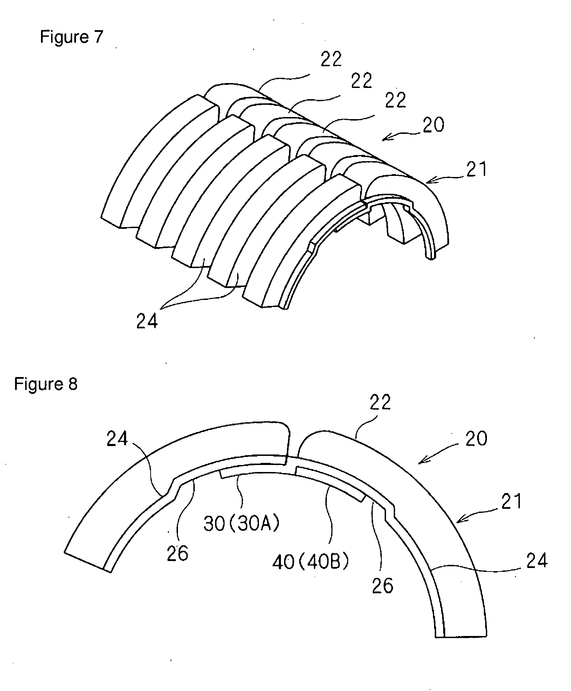

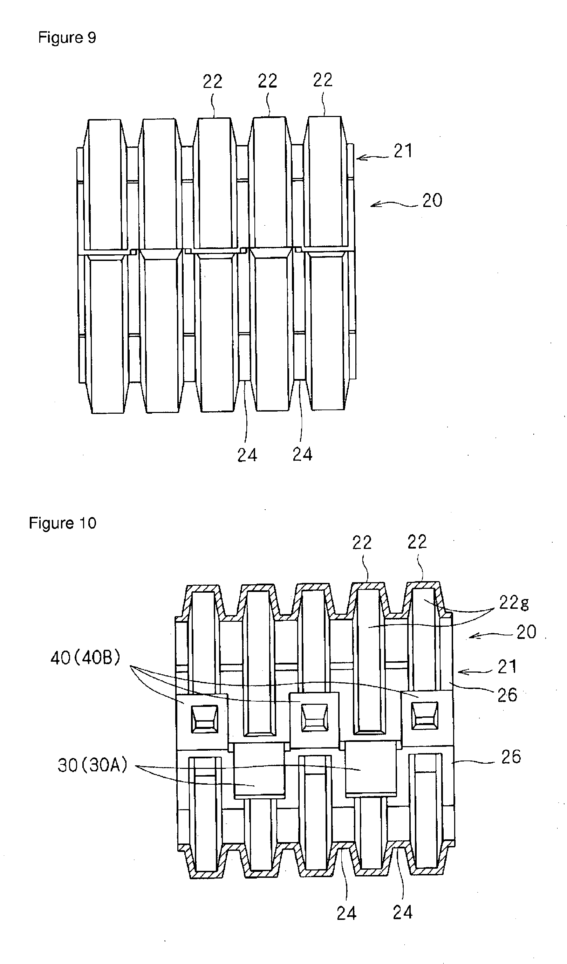

That is, in a state where the wire harness 10 is disposed in the corrugated tube 20, as shown in FIG. 5 and FIG. 6, both the side edge portions of the corrugated tube body portion 21 are caused to approach each other to slip the plurality of the flat pieces 30A into the inner circumferential side of the opposing side edge portions and to slip the plurality of the locking pieces 40B into the inner circumferential side of the opposing side edge portions in a state where the plurality of the flat pieces 30A and the plurality of the locking pieces 40B are disposed between each other. When the guide surfaces 42Bf of the locking projections 42B of the locking pieces 40B abut on the locked portions 46B, the locked portions 46B move along the guide surfaces 42Bf and the locking pieces 40B are deformed elastically toward the inner circumferential side. When the locking projections 42B move past the locked portions 46B, as shown in FIG. 7 to FIG. 12, the locking projections 42B fit within the inner circumferential side recessed portions 22g of the annular projecting portions 22. As a result, the locking pieces 40B are locked to the locked portions 46B in a state where the locking pieces 40B are restrained from moving in a direction for opening the slit S. In this state, the locking pieces 40B are located on the inner circumferential side of the opposing side edge portions and therefore, the side edge portions facing the locking pieces 40B are harder to move to the inner circumferential side than the side edge portions on which the locking pieces 40B are formed. Also, the flat pieces 30A are located on the inner circumferential side of the opposing side edge portions and therefore, the side edge portions facing the flat pieces 30A are harder to move to the inner circumferential side than the side edge portions on which the flat pieces 30A are formed. Therefore, in the corrugated tube body portion 21, positional displacement in the radial direction of both the side edge portions facing each other across the slit S tends not to occur.

With the corrugated tube 20 constituted in the above-described manner, the slit S is closed in a state where the plurality of the flat pieces 30A serving as the plurality of the first extended pieces 30 and the plurality of the locking pieces 40B serving as the plurality of the second extended pieces 40 are disposed on the inner circumferential side of the corrugated tube body portion 21 at different positions from each other in a longitudinal direction of the corrugated tube body portion 21, and therefore, positional displacement of both the side edge portions in a radial direction of the corrugated tube body portion 21 is suppressed.

Here, in particular, an opening of the slit S is suppressed by forming the second extended piece 40 on the locking piece 40B and locking the locking piece 40B to the locked portion 46B. At this time, since positional displacement of both the side edge portions in a radial direction is suppressed by the first extended pieces 30 and the second extended pieces 40, unlocking thereof is suppressed and the opening of the slit S is suppressed securely.

Since at least one of the plurality of the first extended pieces 30 and the plurality of the second extended pieces 40, that is, here, the plurality of the flat pieces 30A serving as the plurality of the first extended pieces 30 is formed in a flat shape, the flat pieces 30A can be inserted into the inner circumferential portion of the opposing side edge portion smoothly and with relatively small force. Therefore, the slit S can be closed relatively easily.

Since the slit S is closed in a state where the plurality of the flat pieces 30A serving as the plurality of the first extended pieces 30 and the plurality of the locking pieces 40B serving as the plurality of the second extended pieces 40 are meshed so as to abut against each other in a longitudinal direction of the corrugated tube body portion 21, there is also hardly any positional displacement of both the side edge portions in a longitudinal direction of corrugated tube body portion 21. Therefore, the opening of the slit S due to positional displacement of both the side edge portions flanking the slit S can be suppressed effectively.

Since the locking projection 42B is formed at the position corresponding to the annular projecting portion 22 of the corrugated tube body portion 21 and locked from the inner circumferential side of the corrugated tube body portion 21 to the locked portion 46B formed on the inner circumferential portion of the annular projecting portion 22 described above, the locking projection 42B can be locked to the locked portion 46B while not affecting the inner diameter of the corrugated tube body portion 21 as much as possible.

Moreover, the plurality of the locking pieces 40B is formed as one of the side edge portions, that is, only as the second extended pieces 40. Accordingly, since the slit S may be mainly closed while adjusting the force so as to lock the locking piece 40B formed on one side edge portion to the locked portion 46B on the other side edge portion, the slit S can be easily closed.

Since the relief recessed portion 26 is formed on an inner circumferential side portion of both the side edge portions in the corrugated tube body portion 21, where the plurality of the first extended pieces 30 and the plurality of the second extended pieces 40 are disposed, the first extended pieces 30 and the second extended pieces 40 are kept from projecting toward the inner circumferential side of the corrugated tube body portion 21.

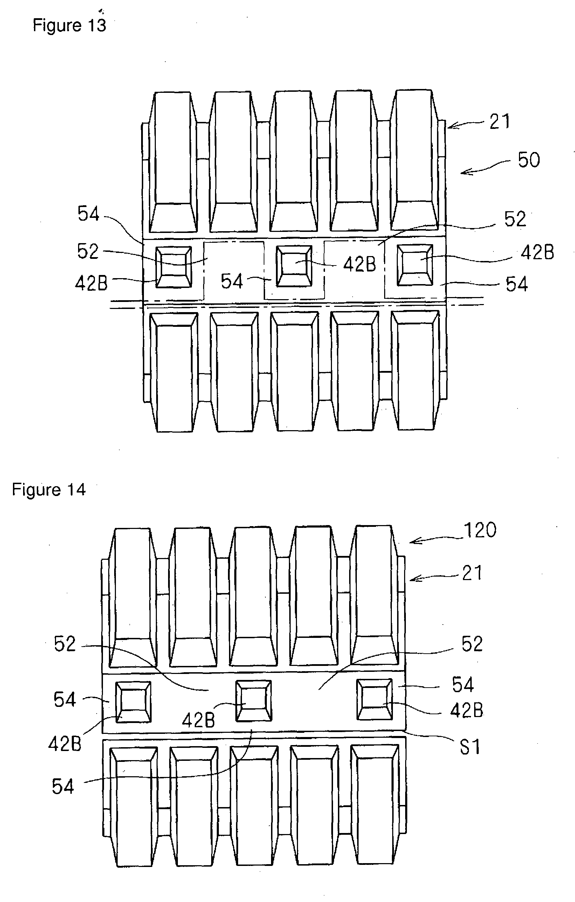

The corrugated tube 20 as described above may be produced with an intermediate corrugated tube product 50 as shown in FIG. 13.

That is, the intermediate corrugated tube product 50 is an intermediate product formed by extruding melted resin in a tubular shape and pressing this resin against a predetermined mold by vacuum molding, blow molding, or the like.

This intermediate corrugated tube product 50 is formed in such a shape that flat piece forming portions 52 for forming the plurality of the flat pieces 30A serving as the plurality of the first extended pieces 30 and locking piece forming portions 54 for forming the plurality of the locking pieces 40B serving as the plurality of the second extended pieces 40 are alternately provided in a single piece in a longitudinal direction of the corrugated tube body portion 21 between both the side edge portions of the corrugated tube body portion 21 with a C-shaped cross section described above, and provided with an overall tubular shape. In other words, the plurality of the locking piece forming portions 54 is provided with gaps in the longitudinal direction between both side edge portions of the corrugated tube body portion 21, and the flat piece forming portions 52 are integrally connected to the plurality of the locking piece forming portions 54 between the plurality of the locking piece forming portions 54.

This intermediate corrugated tube product 50 can be used, depending on the dividing positions, not only as the corrugated tube 20 according to the above-described embodiment but also as a corrugated tube 120 in which the first extended pieces 30 and the second extended pieces 40 described above are not disposed alternately, as shown in FIG. 14.

That is, as indicated by a long-dashed short-dashed line in FIG. 13, the intermediate corrugated tube product 50 can be used as the corrugated tube 20 according to the above-described embodiment by being cut in a rectangular wave shape through the front end portions of a plurality of the flat piece forming portions 52, between the flat piece forming portions 52 and the locking piece forming portions 54, and the front end portions of a plurality of the locking piece forming portions 54. It should be noted that the intermediate corrugated tube product 50 can be cut by laser processing or the like.

Moreover, as indicated by a long-dashed double-short-dashed line in FIG. 13, if the intermediate corrugated tube product 50 is cut linearly through the front end portions of the locking piece forming portions 54 and base end portions of the flat piece forming portions 52, the corrugated tube 120 is produced, in which the locking projections 42B are formed on one side of both the side edge portions flanking a linear slit S1 as shown in FIG. 14, that is, in which both the side edge portions flanking the slit S1 in the corrugated tube 120 have an overall linear shape. In this corrugated tube 120, the locking projections 42B are easily unlocked by deforming the side edge portions having the locking projections 42B toward the inner circumferential side even in a state where the locking projections 42B are locked to the opposing side edge portions.

Accordingly, the intermediate corrugated tube product 50 described above has the advantage of being capable of separately producing the corrugated tube 20 that is suitable for use for a purpose of making it hard to unlock the locking projections 42B (that is, use based on the premise that the slit S is not opened after being closed once) and the corrugated tube 120 that is suitable for use in a state where the locking projections 42B are easily unlocked (that is, use based on the premise that there is a possibility to open the slit S after being closed once).

### Modified examples

In the above-described embodiment, not all of the second extended pieces 40 need to be formed into the locking pieces 40B, and it is also possible that only some of the second extended pieces are formed into the locking pieces.

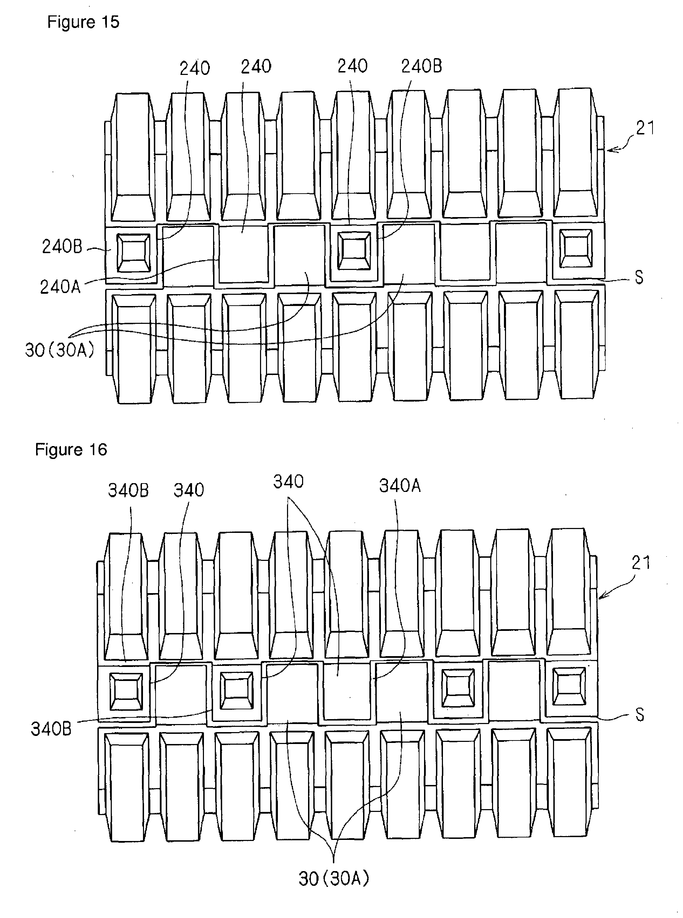

For example, in a corrugated tube 220 as shown in FIG. 15, second extended pieces 240 corresponding to the second extended pieces 40 are alternately formed into locking pieces 240B corresponding to the locking pieces 40B, and the rest is formed into flat pieces 240A corresponding to the flat pieces 30A.

For example, in a corrugated tube 320 as shown in FIG. 16, second extended pieces 340 corresponding to the second extended pieces 40 are formed into locking pieces 340B corresponding to the locking pieces 40B such that after every two second extended pieces 340, one second extended piece 340 is not formed, and the rest is formed into flat pieces 340A corresponding to the flat pieces 30A.

These cases can also provide the same effects as the above-described embodiment.

Moreover, in the above-described embodiment, the locking pieces 40B do not necessarily have to be formed only on one side of both the side edge portions flanking the slit S, and it is also possible to form the locking pieces on both the side edge portions.

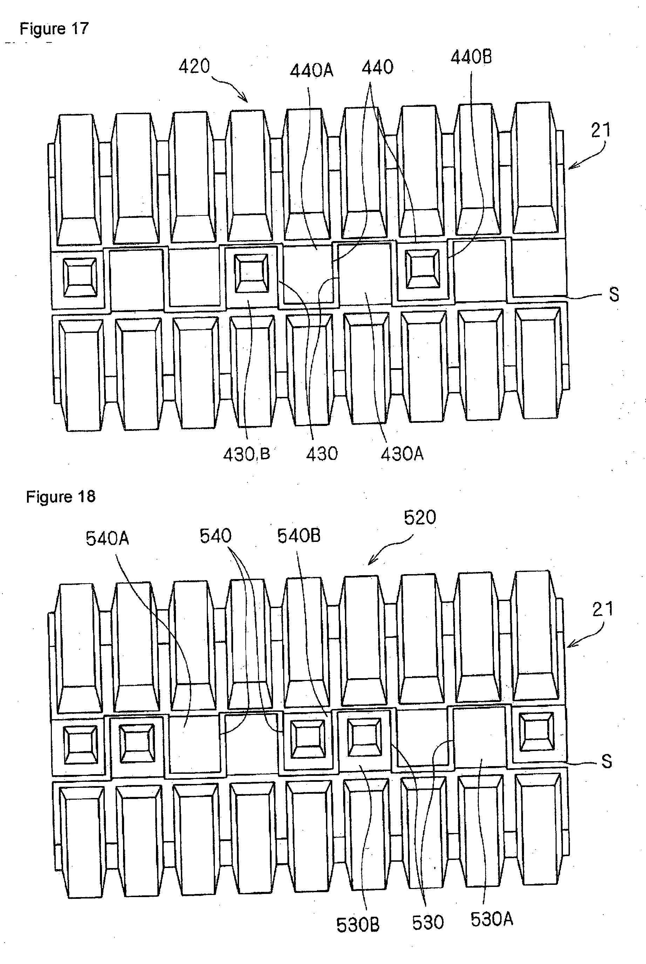

For example, in a corrugated tube 420 as shown in FIG. 17, some of the first extended pieces 430 corresponding to the first extended pieces 30 are formed into locking pieces 430B corresponding to the locking pieces 40B, some of the second extended pieces 440 corresponding to the second extended pieces 40 are formed into locking pieces 440B corresponding to the locking pieces 40B, and flat pieces 430A on one side of the side edge portions and flat pieces 440A on the other side of the side edge portions, both of which correspond to the flat pieces 30A, are interposed between the locking pieces 430B and the locking pieces 440B.

For example, in a corrugated tube 520 as shown in FIG. 18, some of the first extended pieces 530 corresponding to the first extended pieces 30 are formed into locking pieces 530B corresponding to the locking pieces 40B, some of the second extended pieces 540 corresponding to the second extended pieces 40 are formed into locking pieces 540B corresponding to the locking pieces 40B, and the locking pieces 530B and the locking pieces 540B are adjacent to each other. Flat pieces 530A on one side of the side edge portions and flat pieces 540A on the other side of the side edge portions, both of which correspond to the flat pieces 30A, are interposed between combinations of the locking piece 530B and the locking piece 540B.

These cases can also provide the same effects as the above-described embodiment except for effects provided by disposing the locking pieces 40B on one side of the side edge portions.

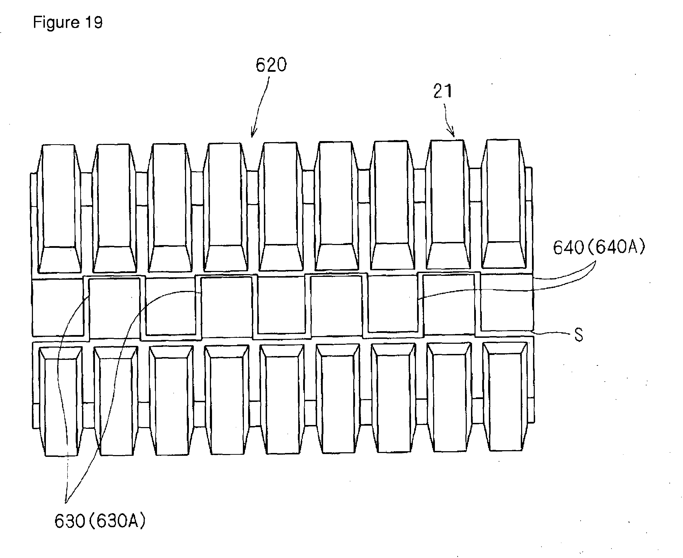

Moreover, as in a corrugated tube 620 as shown in FIG. 19, all of the first extended pieces 630 corresponding to the first extended pieces 30 and the second extended pieces 640 corresponding to the second extended pieces 40 are formed into flat pieces 630A or flat pieces 640A similar to the flat pieces 30A.

This case can also provide the same effects as the above-described embodiment except for effects provided by the above-described locking projections 42B.

Having described the present invention in detail, the foregoing description is illustrative in all aspects and the present invention is not limited thereto. It is understood that countless variants not illustrated herein are conceivable without deviating from the scope of the present invention.

## Claims

1. A corrugated tube comprising
a corrugated tube body portion (21) formed in a tubular shape in which annular projecting portions (22) and annular recessed portions (24) are alternately formed in a longitudinal direction and a slit (5) is formed in a longitudinal direction;
a plurality of first extended pieces (30) provided on one side of two side edge portions of the corrugated tube body portion, the side edge portions flanking the slit; and
a plurality of second extended pieces (40) provided on the other side of the two side edge portions,
wherein the slit (5) is closed in a state where the plurality of the first extended pieces (30) and the plurality of the second extended pieces (40) are disposed on an inner circumferential side of the corrugated tube body portion (21) at respectively different positions in a longitudinal direction of the corrugated tube body portion, **characterised in that**
at least one of the plurality of the first extended pieces (30) and the plurality of the second extended pieces (40) is formed into a flat piece (30A) having a flat shape.

2. The corrugated tube according to claim 1,
wherein the slit is closed in a state where the plurality of the first extended pieces and the plurality of the second extended pieces are meshed so as to abut against each other in a longitudinal direction of the corrugated tube body portion.

3. The corrugated tube according to claim 1,
wherein at least one of the plurality of the first extended pieces and the plurality of the second extended pieces that are not formed into the flat pieces, is formed into a locking piece having a locking projection, and
a portion of the two side edge portions that faces the locking piece is formed into a locked portion that can lock the locking piece.

4. The corrugated tube according to claim 3,
wherein the locking projection is formed at a position corresponding to the annular projecting portion of the corrugated tube body portion and is locked to the locked portion from an inner circumferential side of the corrugated tube body portion.

5. The corrugated tube according to claim 3,
wherein the locking piece is formed only on one side of the two side edge portions.

6. The corrugated tube according to claim 1,
wherein a relief recessed portion is formed on an inner circumferential side portion of the two side edge portions in the corrugated tube body portion, where the plurality of the first extended pieces and the plurality of the second extended pieces are disposed.

7. An intermediate corrugated tube product comprising:
a corrugated tube body portion (21) formed in a tubular shape in which annular projecting portions (22) and annular recessed portions (24) are alternately formed in a longitudinal direction;
a plurality of locking piece forming portions (40) that have a locking projection and are provided spaced apart from each other in a longitudinal direction of the corrugated tube body portion (21) between the two side edge portions of the corrugated tube body portion **characterised in that**
a plurality of flat piece forming portions (30) are formed in a flat shape and are provided between the plurality of the locking piece forming portions (40) provided between the two side edge portions of the corrugated tube body portion (21) in a state of being integrated with the plurality of the locking piece forming portions (40).

8. A wire harness with a corrugated tube comprising:
a wire harness including at least one electric wire; and
the corrugated tube according to any one of claims 1 to 6, covering the wire harness in a state where the plurality of the first extended pieces and the plurality of the second extended pieces are inserted into the corrugated tube body.

## Patentansprüche

1. Wellrohr (20) mit
einem Wellrohrkörperbereich (21), der in einer Rohrform ausgebildet ist und in dem ringförmige hervorstehende Bereiche (22) und ringförmige zurückgesetzte Bereiche (24) abwechselnd in einer Längsrichtung ausgebildet sind und ein Schlitz (5) in einer Längsrichtung ausgebildet ist;
einer Vielzahl von ersten Verlängerungsstücken (30), die an einer Seite von zwei Seitenrandbereichen des Wellrohrkörperbereichs (21) vorgesehen sind, wobei die Seitenrandbereiche den Schlitz (5) flankieren; und
einer Vielzahl von zweiten Verlängerungsstücken (40), die an der anderen Seite der zwei Seitenrandbereiche vorgesehen sind,
wobei der Schlitz (5) in einem Zustand, in dem die Vielzahl der ersten Verlängerungsstücke (30) und die Vielzahl der zweiten Verlängerungsstücke (40) an einer Innenumfangsseite des Wellrohrkörperbereichs (21) an entsprechend unterschiedlichen Positionen in einer Längsrichtung des Wellrohrkörperbereichs (21) angeordnet sind, geschlossen ist, **dadurch gekennzeichnet, dass**
zumindest eines der Vielzahl der ersten Verlängerungsstücke (30) und der Vielzahl der zweiten Verlängerungsstücke (40) in ein flaches Stück (30A) mit einer flachen Form geformt ist.

2. Wellrohr (20) nach Anspruch 1,
wobei der Schlitz (5) in einem Zustand geschlossen ist, in dem die Vielzahl der ersten Verlängerungsstücke (30) und die Vielzahl der zweiten Verlängerungsstücke (40) derart in Eingriff stehen, dass sie in einer Längsrichtung des Wellrohrkörperbereichs (21) aneinander anliegen.

3. Wellrohr (20) nach Anspruch 1,
wobei zumindest eines der Vielzahl der ersten Verlängerungsstücke (30) und der Vielzahl der zweiten Verlängerungsstücke (40), die nicht in die flachen Stücke (30A) geformt sind, in ein Schließstück (40B) mit einer Schließerhebung (42B) geformt ist, und
ein Bereich der zwei Seitenrandbereiche, der dem Schließstück (40B) gegenüberliegt, in einen Verschlussbereich (46B) geformt ist, der das Schließstück (40B) verschließen kann.

4. Wellrohr (20) nach Anspruch 3,
wobei die Schließerhebung (42B) an einer Position ausgebildet ist, die dem ringförmigen hervorstehenden Bereich (22) des Wellrohrkörperbereichs (21) entspricht, und zu dem Verschlussbereich (46B) von einer Innenumfangsseite des Wellrohrkörperbereichs (21) verriegelt wird.

5. Wellrohr (20) nach Anspruch 3,
wobei das Schließstück (40B) nur an einer Seite der zwei Seitenrandbereiche ausgebildet ist.

6. Wellrohr (20) nach Anspruch 1,
wobei ein zurückgesetzter, vertiefter Bereich (26) an einem Innenumfangsseitenbereich der zwei Seitenrandbereiche in dem Wellrohrkörperbereich (21) ausgebildet ist, in dem die Vielzahl der ersten Verlängerungsstücke (30) und die Vielzahl der zweiten Verlängerungsstücke (40) angeordnet sind.

7. Wellrohrzwischenprodukt (50) mit:
einem Wellrohrkörperbereich (21), der in einer Rohrform ausgebildet ist und in dem ringförmige hervorstehende Bereiche (22) und ringförmige zurückgesetzte Bereiche (24) abwechselnd in einer Längsrichtung ausgebildet sind;
einer Vielzahl an Bereichen (40), die Schließstücke (40B) ausbilden, die eine Schließerhebung (42B) haben und die räumlich getrennt voneinander in einer Längsrichtung des Wellrohrkörperbereichs (21) zwischen den zwei Seitenrandbereichen des Wellrohrkörperbereichs (21) vorgesehen sind, **dadurch gekennzeichnet, dass**
eine Vielzahl der Bereiche, die flache Stücke (30A) ausbilden, in einer flachen Form ausgebildet sind und zwischen der Vielzahl der Schließstücke (40B) ausbildenden Bereiche (40), vorgesehen sind, wobei diese zwischen den zwei Seitenrandbereichen des Wellrohrkörperbereichs (21) in einem Zustand vorgesehen sind, in dem sie an die Vielzahl der Schließstücke (40B) ausbildenden Bereiche, angebunden sind.

8. Kabelbaum (10) mit einem Wellrohr (20) mit:
einem Kabelbaum (10), der zumindest ein elektrisches Kabel enthält; und dem Wellrohr (20) nach einem der Ansprüche 1 bis 6, welches den Kabelbaum (10) in einem Zustand bedeckt, in dem die Vielzahl der ersten Verlängerungsstücke (30) und die Vielzahl der zweiten Verlängerungsstücke (40) in den Wellrohrkörper eingebracht sind.

## Revendications

1. Tube annelé comprenant :
une partie de corps de tube annelé (21) réalisée d'une forme tubulaire dans laquelle des parties annulaires en saillie (22) et des parties annulaires en creux (24) sont formées de manière alternée dans une direction longitudinale et une fente (S) est formée dans une direction longitudinale ;
une pluralité de premières pièces étendues (30) agencées sur un premier côté de deux parties de bord latérales de la partie de corps de tube annelé, les parties de bord latérales bordant la fente ; et
une pluralité de secondes pièces étendues (40) agencées sur l'autre côté des deux parties de bord latérales,
dans lequel la fente (S) est fermée dans un état dans lequel la pluralité des premières pièces étendues (30) et la pluralité des secondes pièces étendues (40) sont disposées sur un côté circonférentiel interne de la partie de corps de tube annelé (21) à des positions respectivement différentes dans une direction longitudinale de la partie de corps de tube annelé, **caractérisé en ce que**
au moins l'une de la pluralité de premières pièces étendues (30) et de la pluralité de secondes pièces étendues (40) est réalisée en une pièce plate (30A) présentant une forme plate.

2. Tube annelé selon la revendication 1,
dans lequel la fente est fermée dans un état dans lequel la pluralité de premières pièces étendues et la pluralité de secondes pièces étendues sont imbriquées de manière à venir en butée l'une contre l'autre dans une direction longitudinale de la partie de corps de tube annelé.

3. Tube annelé selon la revendication 1,
dans lequel au moins une de la pluralité de premières pièces étendues et de la pluralité de secondes pièces étendues qui n'est pas formée en une pièce plate, est formée en une pièce de verrouillage comportant une saillie de verrouillage, et
une partie des deux parties de bord latérales qui est face à la pièce de verrouillage est formée en une partie verrouillée qui peut verrouiller la pièce de verrouillage.

4. Tube annelé selon la revendication 3,
dans lequel la saillie de verrouillage est formée à une position correspondant à la partie annulaire en saillie de la partie de corps de tube annelé et est verrouillée sur la partie verrouillée à partir d'un côté circonférentiel interne de la partie de corps de tube annelé.

5. Tube annelé selon la revendication 3,
dans lequel la pièce de verrouillage est formée uniquement sur un côté des deux parties de bord latérales.

6. Tube annelé selon la revendication 1,
dans lequel une partie de limitation en creux est formée sur une partie latérale circonférentielle interne des deux parties de bord latérales dans la partie de corps de tube annelé, dans laquelle la pluralité de premières pièces étendues et la pluralité de secondes pièces étendues sont disposées.

7. Produit à base de tube annelé intermédiaire comprenant :
une partie de corps de tube annelé (21) réalisée en une forme tubulaire dans laquelle des parties annulaires en saillie (22) et des parties annulaires en creux (24) sont formées de manière alternée dans une direction longitudinale ;
une pluralité de parties formant pièce de verrouillage (40) qui comportent une saillie de verrouillage et sont agencées de manière espacée l'une de l'autre dans une direction longitudinale de la partie de corps de tube annelé (21) entre les deux parties de bord latérales de la partie de corps de tube annelé, **caractérisé en ce que**
une pluralité de parties formant pièce plate (30) sont réalisées en une forme plate et sont agencées entre la pluralité des parties formant pièce de verrouillage (40) agencées entre les deux parties de bord latérales de la partie de corps de tube annelé (21) dans un état dans lequel elles sont intégrées avec la pluralité de parties formant pièce de verrouillage (40).

8. Faisceau de câble avec un tube annelé comprenant :
un faisceau de câble comportant au moins un câble électrique ; et
le tube annelé selon l'une quelconque des revendications 1 à 6, recouvrant le faisceau de câble dans un état dans lequel la pluralité de premières pièces étendues et la pluralité de secondes pièces étendues sont insérées dans le corps de tube annelé.
